# EUROPEAN PATENT SPECIFICATION

(11) **EP 3 032 143 B1**
(45) Date of publication and mention of the grant of the patent: **20.01.2021**
(21) Application number: 15198336.8
(22) Date of filing: 08.12.2015
(51) Int. Cl.: F16H 57/035, F16H 57/04

(54) **TRANSFER CASE AND MOTORCYCLE HAVING THE SAME**
VERTEILERGETRIEBE UND MOTORRAD DAMIT
BOÎTE DE TRANSFERT ET MOTOCYCLETTE DOTÉE DE CELLE-CI

(30) Priority: 09.12.2014 TW 103142876
(43) Date of publication of application: 15.06.2016
(73) Proprietor: Kwang Yang Motor Co., Ltd., Kaohsiung City 80794 (TW)
(72) Inventor: YANG, Sai-Dai, 83347 Kaohsiung City (TW); LAI, Chien-Hung, 81367 Kaohsiung City (TW); YU, Meng-Lin, 82051 Kaohsiung City (TW)
(74) Representative: Regimbeau

(56) References cited:
- EP-A1- 1 514 785
- EP-A1- 2 693 083
- US-A- 4 671 782
- US-A1- 2004 224 806

## Description

The disclosure relates to a transfer case, and more particularly to a transfer case capable of guiding air to flow thereinto.

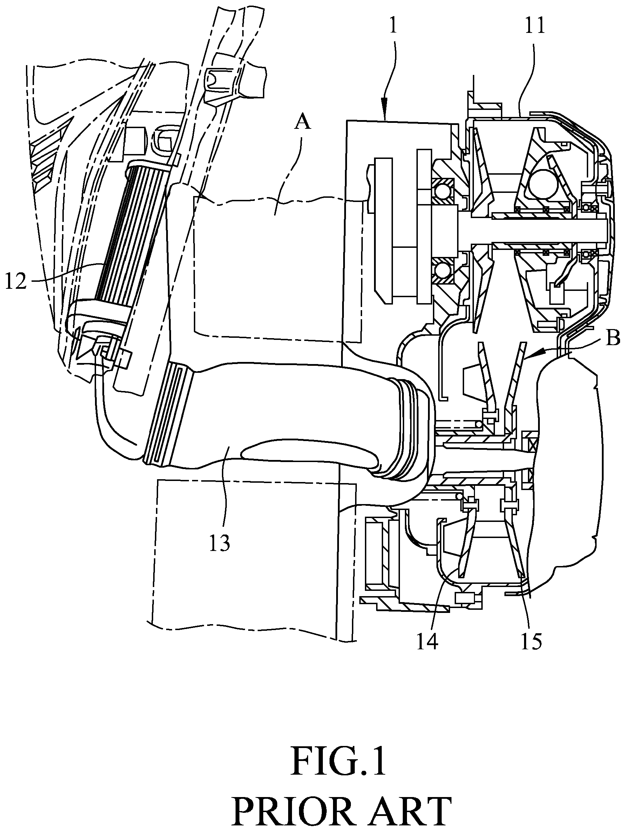

Referring to Fig. 1, a conventional transfer case 1 is disposed on a frame (A) of a motorcycle, and includes a casing 11 that is disposed at one side of the frame (A), an air filter 12 that is disposed at an opposite side of the frame (A) distal from the casing 11, a guiding tube 13 that extends through the frame (A) and that communicates fluidly the casing 11 and the air filter 12, a first disk 14 that is disposed in the casing 11 and that is proximate to the guiding tube 13, and a second disk 15 that is disposed in the casing 11 and that is distal from the guiding tube 13. Ambient air is filtered by the air filter 12, and subsequently flows into the casing 11 via the guiding tube 13 for cooling down the first disk 14, the second disk 15 and other transmission components.

However, when the first and second disks 14, 15 are in operation, the filtered air is hindered from flowing toward a side surface (B) of the second disk 15 facing away from to the first disk 14. Therefore, the second disk 15 cannot be effectively cooled down. Moreover, since the casing 11 and the air filter 12 are located respectively at two opposite sides of the frame (A), the conventional transfer case 1 has an incompact and relatively complex structure.

Document US 4 671 782 describes a cooler for a belt type stageless transmission in a vehicle in which a transmission casing is provided on one side of an engine body, and a belt type stageless transmission for operatively connecting between a crank shaft of the engine body and an output shaft supported in the transmission casing is housed in the transmitted casing, wherein a centrifugal fan for sucking the open air into the transmission casing is provided on either one of a pair of pulley halves of a variable diameter pulley of the transmission and an axial flow fan for guiding the sucked-in open air in the axial direction of the variable diameter pulley is provided on the other pulley half; wherein an air intake port is opened in the front portion of the transmission casing in the vicinity of the centrifugal fan and an air exhaust port is in the rear portion of the transmission casing, and a guide plate for guiding the air flowing along the lower surface of the transmission casing so as to peel it off from the lower surface is further provided on the rear portion of the transmission casing below the air exhaust port; and further wherein an air passage through which the running air can flow is defined between the engine body and the transmission casing.

Therefore, an object of the disclosure is to provide a transfer case that can overcome at least one of the aforesaid drawbacks associated with the prior art.

According to the disclosure, the invention proposes a transfer case adapted to be disposed on a motorcycle body as defined in claim 1 and a motorcycle as defined in claim 14. Embodiments of the transfer case and of the motorcycle are defined in the dependent claims.

The transfer case includes a casing unit, a transmission unit and a fluid guide unit. The casing unit defines a retaining space therein. The transmission unit is disposed in the retaining space. The fluid guide unit includes a first opening that is formed in the casing unit and that is proximate to one side of the transmission unit, at least one second opening that is formed in the casing unit and that is proximate to an opposite side of the transmission unit, an air outlet that is formed in the casing unit and that is spaced apart from the second opening, a guiding channel that has one end communicating fluidly with the first opening, and a filter member that covers the second opening and the other end of the guiding channel distal from the first opening. Ambient air is filtered by the filter member and subsequently flows into the retaining space via the second opening and via the guiding channel and the first opening for cooling down the transmission unit, and exits the retaining space via the air outlet.

Another object of the disclosure is to provide a motorcycle that can overcome at least one of the aforesaid drawbacks associated with the prior art.

According to the disclosure, the motorcycle includes a transfer case, a seat unit and a fuel tank. The transfer case includes a casing unit, a transmission unit and a fluid guide unit. The casing unit defines a retaining space therein. The transmission unit is disposed in the retaining space. The fluid guide unit includes a first opening that is formed in the casing unit and that is proximate to one side of the transmission unit, at least one second opening that is formed in the casing unit and that is proximate to an opposite side of the transmission unit, an air outlet that is formed in the casing unit and that is spaced apart from the second opening, a guiding channel that has one end communicating fluidly with the first opening, and a filter member that covers the second opening and the other end of the guiding channel distal from the first opening. Ambient air is filtered by the filter member and subsequently flows into the retaining space via the second opening and via the guiding channel and the first opening for cooling down the transmission unit, and exits the retaining space via the air outlet. The seat unit and the fuel tank are arranged in a front-rear direction of the motorcycle. The transfer case is disposed under the seat unit and the fuel tank. The guiding channel of the fluid guide unit is located between the seat unit and the fuel tank.

Other features and advantages of the disclosure will become apparent in the following detailed description of the embodiment with reference to the accompanying drawings, of which:
Fig. 1 is a fragmentary partly sectional view of a conventional transfer case;
Fig. 2 is a fragmentary side view illustrating an embodiment of a transfer case according to the disclosure and omitting a cover member;
Fig. 3 is a fragmentary sectional view illustrating the embodiment;
Fig. 4 is an exploded perspective view of the embodiment;
Fig. 5 is another fragmentary sectional view illustrating the embodiment;
Fig. 6 is a side view of a second casing part of the embodiment;
Fig. 7 is a fragmentary perspective view of a first casing part of the embodiment;
Fig. 8 is a side view of the embodiment;
Fig. 9 is a fragmentary sectional view taken along line IX-IX in Fig. 8; and
Fig. 10 is a perspective view of the cover member.

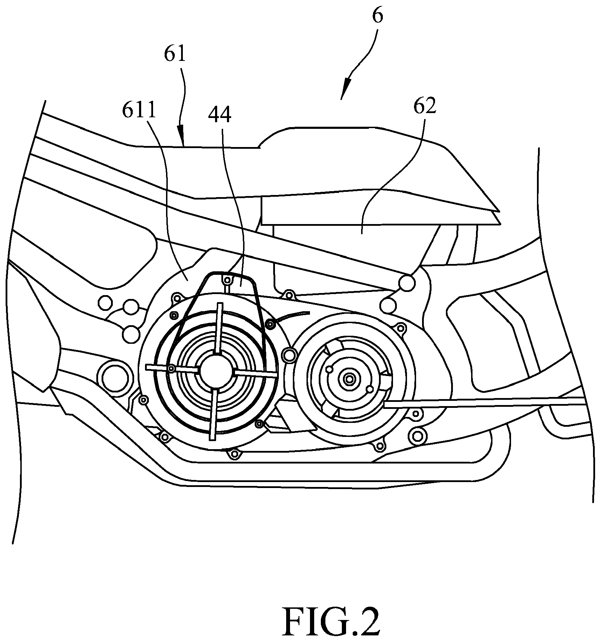

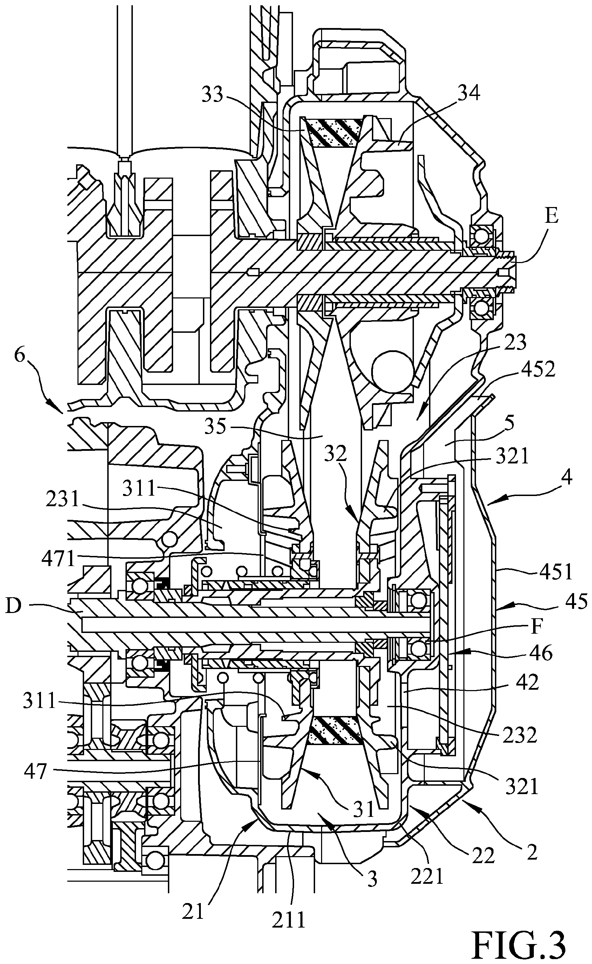

Referring to Figs. 2 and 3, an embodiment of the transfer case according to the disclosure is disposed on a motorcycle body 6. The motorcycle body 6 includes a seat unit 61, a fuel tank 62, a transmission shaft (D) and a crank shaft (E). The seat unit 61 includes a storage compartment 611. The seat unit 61 and the fuel tank 62 are arranged in a front-rear direction of the motorcycle body 6. The transfer case is disposed under the storage compartment 611 and the fuel tank 62. In Fig. 2, the fuel tank 62 is disposed in front of the storage compartment 611. However, the storage compartment 611 may be disposed in front of the fuel tank 62.

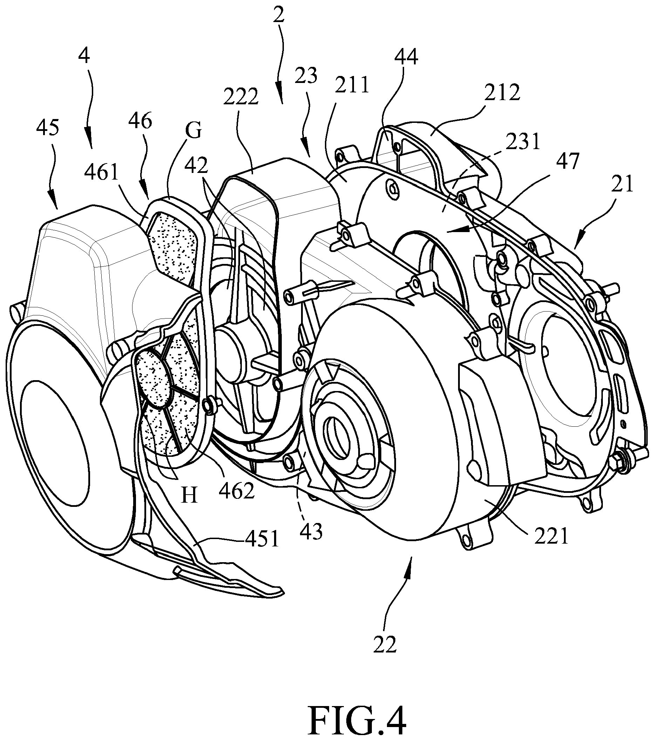

Referring further to Fig. 4, the transfer case includes a casing unit 2, a transmission unit 3 and a fluid guide unit 4.

The casing unit 2 includes a first casing part 21, and a second casing part 22 that is disposed at one side of the first casing part 21 opposite to the motorcycle body 6. The first casing part 21 has a first main wall section 211, and a first auxiliary wall section 212 that extends from an outer surface of the first main wall section 211. The second casing part 22 has a second main wall section 221 that cooperates with the first main wall section 211 to define a retaining space 23 therebetween, and a second auxiliary wall section 222 that extends from an outer surface of the second main wall section 221. In this embodiment, the first main wall section 211 and the first auxiliary wall section 212 are formed as one piece, and the second main wall section 221 and the second auxiliary wall section 222 are formed as one piece. However, in a variation, the first main wall section 211 and the first auxiliary wall section 212 may be configured as two individual components, and the second main wall section 221 and the second auxiliary wall section 222 may be configured as two individual components.

The transmission unit 3 is disposed in the retaining space 23, and includes a first driven disk 31, a second driven disk 32, a first driving disk 33, a second driving disk 34 and a belt 35. The first and second driven disks 31, 32 are mounted on the transmission shaft (D), are spaced apart from each other along the transmission shaft (D), and are respectively disposed adjacent to the first and second casing parts 21, 22. The first and second driving disks 33, 34 are mounted on the crank shaft (E), are spaced apart from each other along the crank shaft (E), and are respectively disposed adjacent to the first and second casing parts 21, 22. The belt 35 is trained on the first and second driven disks 31, 32 and the first and second driving disks 33, 34 so as to transmit rotation of the crank shaft (E) to the transmission shaft (D). The first driven disk 31 has a plurality of fins 311 that are angularly spaced apart from each other and that extend toward the first casing part 21 and away from the second driven disk 32. The second driven disk 32 has a plurality of fins 321 that are angularly spaced apart from each other and that extend toward the second casing part 22 and away from the first driven disk 31.

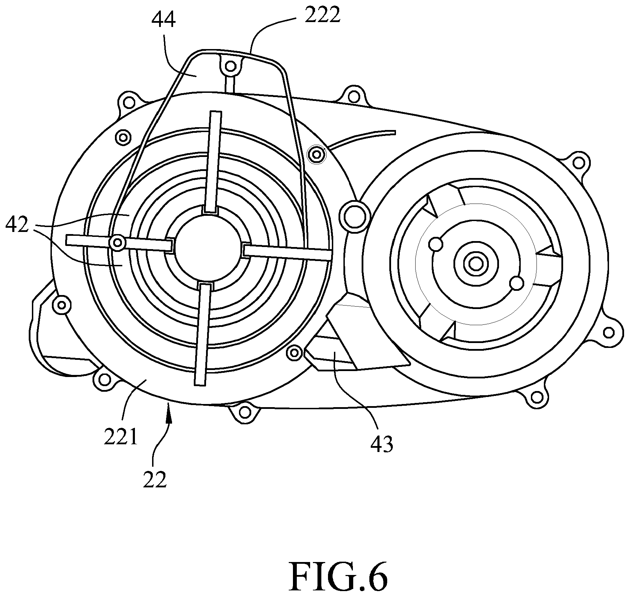

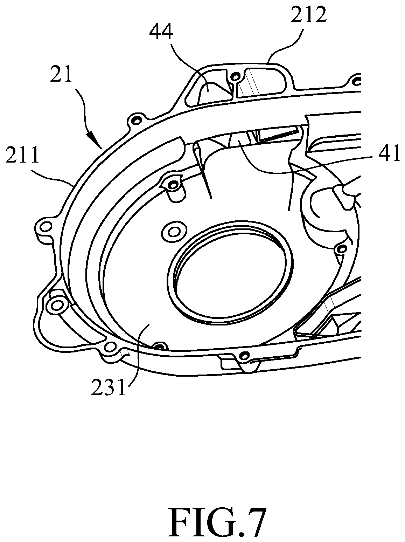

Referring to Figs. 4 to 7, the fluid guide unit 4 includes a first opening 41 (see Fig. 7), a plurality of second openings 42, an air outlet 43 (see Figs. 4 and 6), a guiding channel 44, a cover member 45, a filter member 46 and a guide plate 47.

The first opening 41 is formed in the first main wall section 211 of the first casing part 21, and is proximate to the first driven disk 31. The second openings 42 are formed in the second main wall section 221 of the second casing part 22, are angularly spaced apart from each other about the transmission shaft (D), and are proximate to the fins 321 of the second driven disk 32. The air outlet 43 is formed in the second main wall section 221 of the second casing part 22, is spaced apart from the second openings 42, and is proximate to the second driving disk 34. In this embodiment, each of the second openings 42 extends in the extending direction of the transmission shaft (D), and is disposed adjacent to a bearing (F) that is sleeved on the transmission shaft (D) .

The guiding channel 44 is defined by the first auxiliary wall section 212 of the first casing part 21 and the second auxiliary wall section 222 of the second casing part 22, and has one end communicating fluidly with the first opening 41, the other end distal from the first opening 41, and an intermediate portion located between the ends and spaced apart from the retaining space 23. In this embodiment, the guiding channel 44 is located between the storage compartment 611 of the seat unit 61 (see Fig. 2) and the fuel tank 62 (see Fig. 2), such that the motorcycle body 6 has a compact structure.

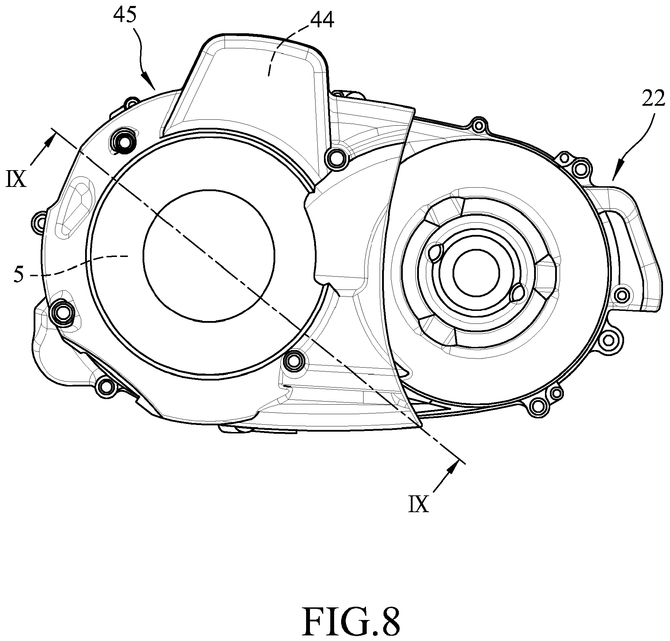

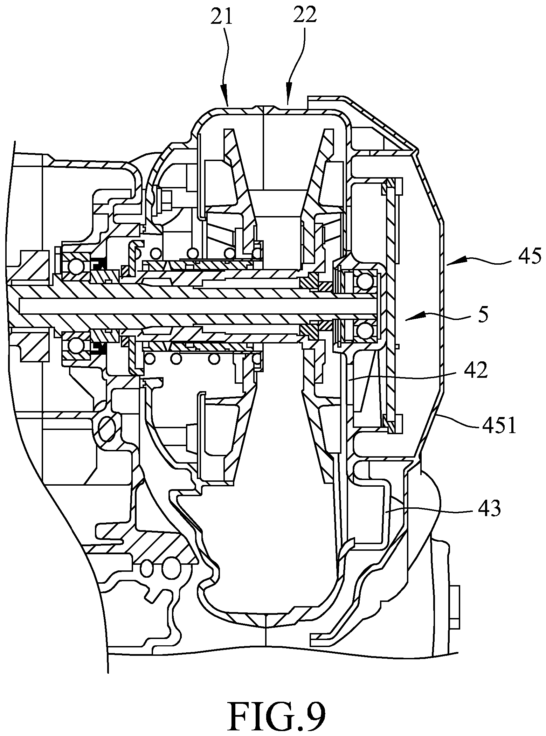

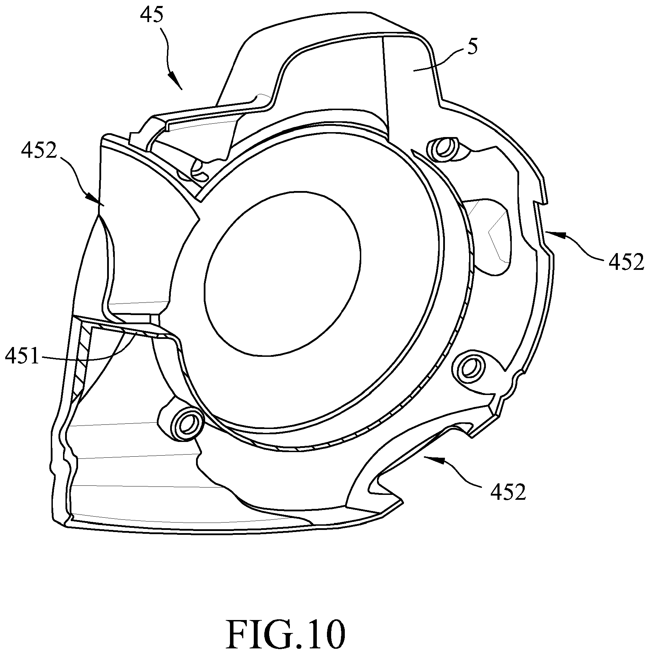

Referring further to Figs. 8 to 10, the cover member 45 is disposed on one side of the second casing part 22 distal from the first casing part 21, and cooperates with the second casing part 22 to define an intake space 5 therebetween. The cover member 45 has a blocking wall section 451 that cooperates with the second casing part 22 to define a plurality of air inlets 452 communicating fluidly the intake space 5 with ambience, and that separates the air outlet 43 and the intake space 5.

The filter member 46 is disposed in the intake space 5, and covers the second openings 42 and the end of the guiding channel 44 distal from the first opening 41. The filter member 46 includes a frame 461 that is detachably mounted to the second main wall section 221 of the second casing part 22, and a filter sheet 462 that is disposed on the frame 461 and that covers the second openings 42 and the end of the guiding channel 44 distal from the first opening 41. With particular reference to Fig. 4, the frame 461 consists of an outer ring section (G) and a plurality of rib sections (H). The filter sheet 462 is connected to the outer ring section (G) and supported by the rib sections (H) . Such modularized design facilitates replacement of the filter member 46.

The guide plate 47 is mounted to the first main wall section 211 of the first casing part 21, and divides the retaining space 23 into an air-storing space portion 231 that communicates fluidly with the first opening 41, and an installation space portion 232 that communicates fluidly with the second openings 42. The first and second driven disks 31, 32 are disposed in the installation space portion 232. The guide plate 47 is formed with a communicating hole 471 that communicates fluidly the air-storing space portion 231 with the installation space portion 232 and that permits the transmission shaft (D) to extend therethrough, and has a guiding flange 472 that surrounds the communicating hole 471 and that extends toward the fins 311 of the first driven disks 31.

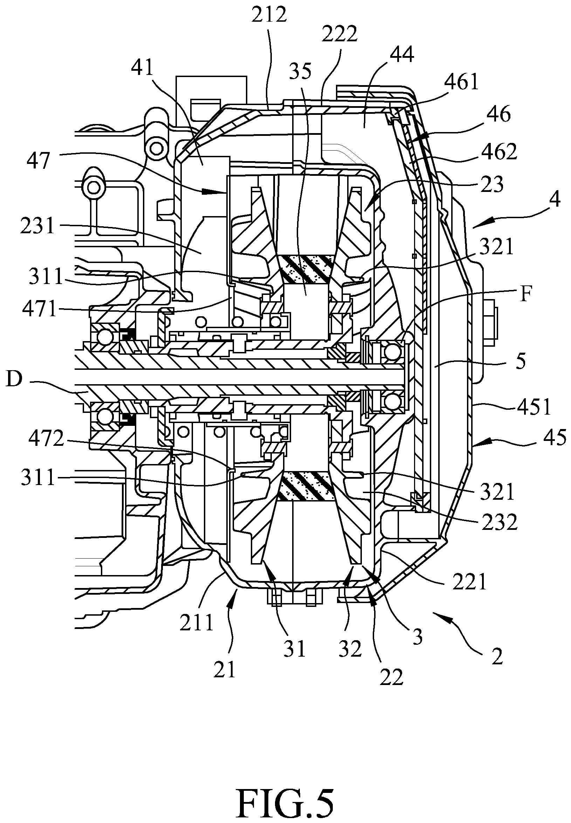

Referring to Figs. 3, 4 and 10, when the motorcycle body 6 is in operation, ambient air first enters the intake space 5 via the air inlets 452 to be filtered by the filter sheet 462 of the filter member 46. A portion of the filtered air enters the installation space portion 232 via the second openings 42 to cool down the second driven disk 32. The remaining portion of the filtered air enters the installation space portion 232 via the guiding channel 44, the first opening 41 (see Fig. 5), the air-storing space portion 231 and the communicating hole 471 to cool down the first driven disk 31. Finally, the air flows to cool down the first and second driving disks 33, 34, and exits the installation space portion 232 via the air outlet 43. Since the blocking wall section 451 of the cover member 45 is disposed between the air outlet 43 and the intake space 5 to separate the air outlet 43 and the intake space 5, the air exiting from the air outlet 43 is prevented from entering the intake space 5.

It should be noted that, in this embodiment, the fluid guide unit 4 is mainly configured to cool down the first and second driven disks 31, 32. However, in a variation of the embodiment, the fluid guide unit 4 may be mainly configured to cool down the first and second driving disks 33, 34. In the variation, the first opening 41 may be proximate to the first driving disk 33, and the second openings 42 may be proximate to the second driving disk 34.

By virtue of the guiding channel 44, the filtered air need not flow past the second driven disk 32 to cool down the first driven disk 31, so that the first driven disk 31 can be effectively cooled down. In addition, since the second openings 42 are proximate to the fins 321 of the second driven disk 32, and since the guiding flange 472 extends toward the fins 311 of the first driven disk 31, the filtered air can be guided to flow directly toward the fins 311, 321 of the first and second driven disk 31, 32 to effectively cool down the first and second driven disk 31, 32. Moreover, since the second openings 42 are disposed adjacent to the bearing (F), the air flowing past the second openings 42 can incidentally cool down the bearing (F).

The advantages of this disclosure are as follows.
1. Since the casing unit 2 and the components of the fluid guide unit 4 are located at the same side of the motorcycle body 6, the transfer case of this disclosure has a relatively compact structure.
2. The blocking wall section 451 of the cover member 45 prevents the air exiting from the air outlet 43 from entering the intake space 5.
3. The guiding channel 44 guides the filtered air to cool down the first driven disk 31 without flowing past the second driven disk 32, so that the transmission unit 3 can be effectively cooled down.

## Claims

1. A transfer case adapted to be disposed on a motorcycle body (6), comprising:
a casing unit (2) defining a retaining space (23) therein; and
a transmission unit (3) disposed in said retaining space (23);
a fluid guide unit (4) including a first opening (41) that is formed in said casing unit (2) and that is proximate to one side of said transmission unit (3), at least one second opening (42) that is formed in said casing unit (2) and that is proximate to an opposite side of said transmission unit (3), an air outlet (43) that is formed in said casing unit (2) and that is spaced apart from said second opening (42), and **characterized by**
a guiding channel (44) that has one end communicating fluidly with said first opening (41), and a filter member (46) that covers said second opening (42) and the other end of said guiding channel (44) distal from said first opening (41);
wherein, ambient air is filtered by said filter member (46) and subsequently flows into said retaining space (23) via said guiding channel (44) and said first opening (41) to cool down the one side of said transmission unit (3) and via said second opening (42) to cool down the opposite side of said transmission unit (3), and exits said retaining space (23) via said air outlet (43).

2. The transfer case as claimed in claim 1, **characterized in that** said casing unit (2) includes first and second casing parts (21, 22) that cooperatively define said retaining space (23), said first opening (41) being formed in said first casing part (21), said second opening (42) and said air outlet (43) being formed in said second casing part (22) .

3. The transfer case as claimed in claim 2, further **characterized in that** said transmission unit (3) includes first and second driven disks (31, 32) that are spaced apart from each other and that are respectively proximate to said first and second openings (41, 42).

4. The transfer case as claimed in claim 2, further **characterized in that** said transmission unit (3) includes first and second driving disks (33, 34) that are spaced apart from each other and that are respectively proximate to said first and second openings (41, 42).

5. The transfer case as claimed in claim 2, further **characterized in that** an intermediate portion of said guiding channel (44) located between said ends of said guiding channel (44) is spaced apart from said retaining space (23).

6. The transfer case as claimed in claim 2, further **characterized in that** said first casing part (21) has a first main wall section (211), and a first auxiliary wall section (212) that extends from an outer surface of said first main wall section (211), said second casing part (22) having a second main wall section (221) that cooperates with said first main wall section (211) to define said retaining space (23) therebetween, and a second auxiliary wall section (222) that extends from an outer surface of said second main wall section (221) and that cooperates with said first auxiliary wall section (212) to define said guiding channel (44) therebetween, said first opening (41) being formed in said first main wall section (211) of said first casing part (21), said second opening (42) and said air outlet (43) being formed in said second main wall section (221) of said second casing part (22).

7. The transfer case as claimed in claim 2, further **characterized in that** said fluid guide unit (4) further includes a cover member (45) that is disposed on one side of said second casing part (22) distal from said first casing part (21), that covers said second opening (42) and said end of said guiding channel (44) distal from said first opening (41), and that cooperates with said second casing part (22) to define an intake space (5) therebetween, said cover member (45) being formed with at least one air inlet (452) that communicates fluidly said intake space (5) with ambience.

8. The transfer case as claimed in claim 7, further **characterized in that** said cover member (45) has a blocking wall section (451) that is disposed between said air outlet (43) and said intake space (5) for preventing the air exiting from said air outlet (43) from entering said intake space (5).

9. The transfer case as claimed in claim 7, further **characterized in that** said filter member (46) is disposed on said second casing part (22), said filter member (46) and said cover member (45) being located at the same side of said second casing part (22).

10. The transfer case as claimed in claim 3, further **characterized in that** said fluid guide unit (4) further includes a guide plate (47) that is mounted in said first casing part (21) and that divides said retaining space (23) into an air-storing space portion (231) communicating fluidly with said first opening (41), and an installation space portion (232) in which said first and second driven disks (31, 32) are disposed.

11. The transfer case as claimed in claim 10, further **characterized in that** said guide plate (47) is formed with a communicating hole (471) that communicates said air-storing space portion (231) with said installation space portion (232), and has a guiding flange (472) that surrounds said communicating hole (471) and that extends toward said first driven disks (31) .

12. The transfer case as claimed in claim 3, further **characterized in that** said first driven disk (31) has a plurality of fins (311) that are angularly spaced apart from each other and that extend away from said second driven disk (32), said second driven disk (32) having a plurality of fins (321) that are angularly spaced apart from each other and that extend away from said first driven disk (31).

13. The transfer case as claimed in claim 1, **characterized in that** said filter member (46) includes a frame (461) that is disposed on said casing unit (2), and a filter sheet (462) that is disposed on said frame (461).

14. A motorcycle **characterized by**:
said transfer case of any one of claims 1 to 13;
a seat unit (61); and
a fuel tank (62), said seat unit (61) and said fuel tank (62) being arranged in a front-rear direction of said motorcycle (6), said transfer case being disposed under said seat unit (61) and said fuel tank (62), said guiding channel (44) of said fluid guide unit (4) being located between said seat unit (61) and said fuel tank (62).

15. The motorcycle as claimed in claim 14, **characterized in that** said seat unit (61) includes a storage compartment (611), said guiding channel (44) of said fluid guide unit (4) being located between said storage compartment (611) and said fuel tank (62).

## Patentansprüche

1. Verteilergetriebe, das dazu geeignet ist, an einer Motorradkarosserie (6) angeordnet zu werden, umfassend:
eine Gehäuseeinheit (2), die in sich einen Aufnahmeraum (23) definiert; und
eine Getriebeeinheit (3), die im Aufnahmeraum (23) angeordnet ist;
eine Fluidführungseinheit (4), einschließlich einer ersten Öffnung (41), die in der Gehäuseeinheit (2) gebildet ist und die sich nahe einer Seite der Getriebeeinheit (3) befindet, mindestens einer zweiten Öffnung (42), die in der Gehäuseeinheit (2) gebildet ist und die sich nahe einer gegenüberliegenden Seite der Getriebeeinheit (3) befindet, einem Luftauslass (43), der in der Gehäuseeinheit (2) gebildet ist und der von der zweiten Öffnung (42) beabstandet ist, und **gekennzeichnet durch**
einen Führungskanal (44), der ein Ende, das fluidisch mit der ersten Öffnung (41) verbunden ist, und ein Filterelement (46) aufweist, das die zweite Öffnung (42) und das andere Ende des Führungskanals (44) distal der ersten Öffnung (41) bedeckt;
wobei Umgebungsluft vom Filterelement (46) gefiltert wird und anschließend durch den Führungskanal (44) und die erste Öffnung (41) in den Aufnahmeraum (23), um die eine Seite der Getriebeeinheit (3) zu kühlen, und durch die zweite Öffnung (42) strömt, um die gegenüberliegende Seite der Getriebeeinheit (3) zu kühlen, und durch den Luftauslass (43) aus dem Aufnahmeraum (23) austritt.

2. Verteilergetriebe nach Anspruch 1, **dadurch gekennzeichnet, dass** die Gehäuseeinheit (2) ein erstes und zweites Gehäuseteil (21, 22) einschließt, die zusammen den Aufnahmeraum (23) definieren, wobei die erste Öffnung (41) im ersten Gehäuseteil (21) gebildet ist, wobei die zweite Öffnung (42) und der Luftauslass (43) im zweiten Gehäuseteil (22) gebildet sind.

3. Verteilergetriebe nach Anspruch 2, weiter **dadurch gekennzeichnet, dass** die Getriebeeinheit (3) eine erste und zweite Abtriebsscheibe (31, 32) einschließt, die voneinander beabstandet sind und die sich nahe der ersten bzw. zweiten Öffnung (41, 42) befinden.

4. Verteilergetriebe nach Anspruch 2, weiter **dadurch gekennzeichnet, dass** die Getriebeeinheit (3) eine erste und zweite Antriebsscheibe (33, 34) einschließt, die voneinander beabstandet sind und die sich nahe der ersten bzw. zweiten Öffnung (41, 42) befinden.

5. Verteilergetriebe nach Anspruch 2, weiter **dadurch gekennzeichnet, dass** ein zwischen den Enden des Führungskanals (44) liegender Zwischenabschnitt des Führungskanals (44) vom Aufnahmeraum (23) beabstandet ist.

6. Verteilergetriebe nach Anspruch 2, weiter **dadurch gekennzeichnet, dass** der erste Gehäuseteil (21) einen ersten Hauptwandabschnitt (211) und einen ersten Hilfswandabschnitt (212) aufweist, der sich von einer Außenfläche des ersten Hauptwandabschnitts (211) ab erstreckt, wobei der zweite Gehäuseteil (22) einen zweiten Hauptwandabschnitt (221) aufweist, der mit dem ersten Hauptwandabschnitt (211) so zusammenwirkt, dass sie zwischen sich den Aufnahmeraum (23) definieren, und einen zweiten Hilfswandabschnitt (222), der sich von einer Außenfläche des zweiten Hauptwandabschnitts (221) ab erstreckt und der mit dem ersten Hilfswandabschnitt (212) so zusammenwirkt, dass sie zwischen sich den Führungskanal (44) definieren, wobei die erste Öffnung (41) im ersten Hauptwandabschnitt (211) des ersten Gehäuseteils (21) gebildet ist, wobei die zweite Öffnung (42) und der Luftauslass (43) im zweiten Hauptwandabschnitt (221) des zweiten Gehäuseteils (22) gebildet sind.

7. Verteilergetriebe nach Anspruch 2, weiter **dadurch gekennzeichnet, dass** die Fluidführungseinheit (4) weiter ein Abdeckelement (45) einschließt, das auf einer Seite des zweiten Gehäuseteils (22) distal des ersten Gehäuseteils (21) angeordnet ist, das die zweite Öffnung (42) und das Ende des Führungskanals (44) distal der ersten Öffnung (41) bedeckt, und das so mit dem zweiten Gehäuseteil (22) zusammenwirkt, dass sie zwischen sich einen Ansaugraum (5) definieren, wobei das Abdeckelement (45) mit mindestens einem Lufteinlass (452) ausgebildet ist, der den Ansaugraum (5) fluidisch mit der Umgebung verbindet.

8. Verteilergetriebe nach Anspruch 7, weiter **dadurch gekennzeichnet, dass** das Abdeckelement (45) einen Sperrwandabschnitt (451) aufweist, der zwischen dem Luftauslass (43) und dem Ansaugraum (5) angeordnet ist, um zu verhindern, dass die aus dem Luftauslass (43) austretende Luft in den Ansaugraum (5) eintritt.

9. Verteilergetriebe nach Anspruch 7, weiter **dadurch gekennzeichnet, dass** das Filterelement (46) am zweiten Gehäuseteil (22) angeordnet ist, wobei das Filterelement (46) und das Abdeckelement (45) auf der gleichen Seite des zweite Gehäuseteils (22) liegen.

10. Verteilergetriebe nach Anspruch 3, weiter **dadurch gekennzeichnet, dass** die Fluidführungseinheit (4) weiter eine Führungsplatte (47) einschließt, die im ersten Gehäuseteil (21) montiert ist und die den Aufnahmeraum (23) in einen Luftspeicherraumabschnitt (231), der fluidisch mit der ersten Öffnung (41) verbunden ist, und einen Einbauraumabschnitt (232) unterteilt, in dem die erste und zweite Abtriebsscheibe (31, 32) angeordnet sind.

11. Verteilergetriebe nach Anspruch 10, weiter **dadurch gekennzeichnet, dass** die Führungsplatte (47) mit einem Verbindungsloch (471) ausgebildet ist, das den Luftspeicherraumabschnitt (231) mit dem Einbauraumabschnitt (232) verbindet, und einen Führungsflansch (472) aufweist, der das Verbindungsloch (471) umgibt und der sich zur ersten Abtriebsscheibe (31) hin erstreckt.

12. Verteilergetriebe nach Anspruch 3, weiter **dadurch gekennzeichnet, dass** die erste Abtriebsscheibe (31) eine Vielzahl von Rippen (311) aufweist, die winkelmäßig voneinander beabstandet sind und die sich von der zweiten Abtriebsscheibe (32) weg erstrecken, wobei die zweite Abtriebsscheibe (32) eine Vielzahl von Rippen (321) aufweist, die winkelmäßig voneinander beabstandet sind und die sich von der ersten Abtriebsscheibe (31) weg erstrecken.

13. Verteilergetriebe nach Anspruch 1, **dadurch gekennzeichnet, dass** das Filterelement (46) einen Rahmen (461) einschließt, der an der Gehäuseeinheit (2) angeordnet ist, und eine Filterschicht (462), die am Rahmen (461) angeordnet ist.

14. Motorrad, **gekennzeichnet durch**:
das Verteilergetriebe nach einem der Ansprüche 1 bis 13;
eine Sitzeinheit (61); und
einen Kraftstofftank (62), wobei die Sitzeinheit (61) und der Kraftstofftank (62) in einer Richtung von der Vorder- zur Rückseite des Motorrads (6) eingerichtet sind, wobei das Verteilergetriebe unter der Sitzeinheit (61) und dem Kraftstofftank (62) angeordnet ist, wobei der Führungskanal (44) der Fluidführungseinheit (4) zwischen der Sitzeinheit (61) und dem Kraftstofftank (62) liegt.

15. Motorrad nach Anspruch 14, **dadurch gekennzeichnet, dass** die Sitzeinheit (61) ein Aufbewahrungsfach (611) einschließt, wobei der Führungskanal (44) der Fluidführungseinheit (4) zwischen dem Aufbewahrungsfach (611) und dem Kraftstofftank (62) liegt.

## Revendications

1. Boîte de transfert adaptée pour être disposée sur un corps de motocyclette (6), comprenant :
une unité carter (2) définissant un espace de retenue (23) à l'intérieur de celle-ci ; et
une unité transmission (3) disposée dans ledit espace de retenue (23) ;
une unité guide de fluide (4) incluant une première ouverture (41) qui est formée dans ladite unité carter (2) et qui est proche d'un côté de ladite unité transmission (3), au moins une seconde ouverture (42) qui est formée dans ladite unité carter (2) et qui est proche d'un côté opposé de ladite unité transmission (3), une sortie d'air (43) qui est formée dans ladite unité carter (2) et qui est espacée de ladite seconde ouverture (42), et **caractérisée par**
un canal de guidage (44) qui a une extrémité communiquant de manière fluidique avec ladite première ouverture (41), et un élément filtre (46) qui couvre ladite seconde ouverture (42) et l'autre extrémité dudit canal de guidage (44) qui est distale par rapport à ladite première ouverture (41) ;
dans laquelle de l'air ambiant est filtré par ledit élément filtre (46) et par la suite s'écoule dans ledit espace de retenue (23) via ledit canal de guidage (44) et ladite première ouverture (41) pour refroidir le côté de ladite unité transmission (3) et via ladite seconde ouverture (42) pour refroidir le côté opposé de ladite unité transmission (3), et quitte ledit espace de retenue (23) via ladite sortie d'air (43).

2. Boîte de transfert selon la revendication 1, **caractérisée en ce que** ladite unité carter (2) inclut des première et seconde parties de carter (21, 22) qui définissent en coopération ledit espace de retenue (23), ladite première ouverture (41) étant formée dans ladite première partie de carter (21), ladite seconde ouverture (42) et ladite sortie d'air (43) étant formées dans ladite seconde partie de carter (22).

3. Boîte de transfert selon la revendication 2, **caractérisée en outre en ce que** ladite unité transmission (3) inclut des premier et second disques menés (31, 32) qui sont espacés l'un de l'autre et qui sont respectivement proches desdites première et seconde ouvertures (41, 42).

4. Boîte de transfert selon la revendication 2, **caractérisée en outre en ce que** ladite unité transmission (3) inclut des premier et second disques menants (33, 34) qui sont espacés l'un de l'autre et qui sont respectivement proches desdites première et seconde ouvertures (41, 42).

5. Boîte de transfert selon la revendication 2, **caractérisée en outre en ce qu'**une portion intermédiaire dudit canal de guidage (44) située entre lesdites extrémités dudit canal de guidage (44) est espacée dudit espace de retenue (23).

6. Boîte de transfert selon la revendication 2, **caractérisée en outre en ce que** ladite première partie de carter (21) a une première section de paroi principale (211), et une première section de paroi auxiliaire (212) qui s'étend à partir d'une surface extérieure de ladite première section de paroi principale (211), ladite seconde partie de carter (22) ayant une seconde section de paroi principale (221) qui coopère avec ladite première section de paroi principale (211) pour définir ledit espace de retenue (23) entre celles-ci, et une seconde section de paroi auxiliaire (222) qui s'étend à partir d'une surface extérieure de ladite seconde section de paroi principale (221) et qui coopère avec ladite première section de paroi auxiliaire (212) pour définir ledit canal de guidage (44) entre celles-ci, ladite première ouverture (41) étant formée dans ladite première section de paroi principale (211) de ladite première partie de carter (21), ladite seconde ouverture (42) et ladite sortie d'air (43) étant formées dans ladite seconde section de paroi principale (221) de ladite seconde partie de carter (22).

7. Boîte de transfert selon la revendication 2, **caractérisée en outre en ce que** ladite unité guide de fluide (4) inclut en outre un élément couvrant (45) qui est disposé sur un côté de ladite seconde partie de carter (22) distale par rapport à ladite première partie de carter (21), qui couvre ladite seconde ouverture (42) et ladite extrémité dudit canal de guidage (44) distale par rapport à ladite première ouverture (41), et qui coopère avec ladite seconde partie de carter (22) pour définir un espace d'arrivée (5) entre ceux-ci, ledit élément couvrant (45) étant formé avec au moins une entrée d'air (452) qui fait communiquer de manière fluidique ledit espace d'arrivée (5) avec une ambiance.

8. Boîte de transfert selon la revendication 7, **caractérisée en outre en ce que** ledit élément couvrant (45) a une section de paroi de blocage (451) qui est disposée entre ladite sortie d'air (43) et ledit espace d'arrivée (5) pour empêcher l'air quittant ladite sortie d'air (43) de pénétrer dans ledit espace d'arrivée (5).

9. Boîte de transfert selon la revendication 7, **caractérisée en outre en ce que** ledit élément filtre (46) est disposé sur ladite seconde partie de carter (22), ledit élément filtre (46) et ledit élément couvrant (45) étant situés au niveau du même côté de ladite seconde partie de carter (22).

10. Boîte de transfert selon la revendication 3, **caractérisée en outre en ce que** ladite unité guide de fluide (4) inclut en outre une plaque guide (47) qui est montée dans ladite première partie de carter (21) et qui divise ledit espace de retenue (23) en une portion d'espace de stockage d'air (231) communiquant de manière fluidique avec ladite première ouverture (41), et une portion d'espace d'installation (232) dans laquelle lesdits premier et second disques menés (31, 32) sont disposés.

11. Boîte de transfert selon la revendication 10, **caractérisée en outre en ce que** ladite plaque guide (47) est formée avec un trou de communication (471) qui fait communiquer ladite portion d'espace de stockage d'air (231) avec ladite portion d'espace d'installation (232), et a un flasque de guidage (472) qui entoure ledit trou de communication (471) et qui s'étend vers lesdits premiers disques menés (31).

12. Boîte de transfert selon la revendication 3, **caractérisée en outre en ce que** ledit premier disque mené (31) a une pluralité d'ailettes (311) qui sont espacées de manière angulaire les unes des autres et qui s'étendent à l'opposé dudit second disque mené (32), ledit second disque mené (32) ayant une pluralité d'ailettes (321) qui sont espacées de manière angulaire les unes des autres et qui s'étendent à l'opposé dudit premier disque mené (31).

13. Boîte de transfert selon la revendication 1, **caractérisée en ce que** ledit élément filtre (46) inclut un cadre (461) qui est disposé sur ladite unité carter (2), et une feuille de filtre (462) qui est disposée sur ledit cadre (461).

14. Motocyclette **caractérisée par** :
ladite boîte de transfert selon l'une quelconque des revendications 1 à 13 ;
une unité siège (61) ; et
un réservoir de carburant (62), ladite unité siège (61) et ledit réservoir de carburant (62) étant agencés dans une direction avant-arrière de ladite motocyclette (6), ladite boîte de transfert étant disposée en dessous de ladite unité siège (61) et dudit réservoir de carburant (62), ledit canal de guidage (44) de ladite unité guide de fluide (4) étant situé entre ladite unité siège (61) et ledit réservoir de carburant (62).

15. Motocyclette selon la revendication 14, **caractérisée en ce que** ladite unité siège (61) inclut un compartiment de stockage (611), ledit canal de guidage (44) de ladite unité guide de fluide (4) étant situé entre ledit compartiment de stockage (611) et ledit réservoir de carburant (62).
